# EUROPEAN PATENT SPECIFICATION

(11) **EP 1 313 190 B1**
(45) Date of publication and mention of the grant of the patent: **03.02.2010**
(21) Application number: 02024540.3
(22) Date of filing: 31.10.2002
(51) Int. Cl.: H02G 3/06

(54) **Mechanical seal for a cable installed in a corrugated duct**
Mechanische Dichtung für Kabel im Wellrohr
Etanchéite mécanique pour cable installé dans un tube ondulé

(30) Priority: 16.11.2001 US 987970; 29.07.2002 US 206195
(43) Date of publication of application: 21.05.2003
(73) Proprietor: Draka Comteq B.V., 1083 HJ Amsterdam (NL)
(72) Inventor: Storaasli, Olaf, Hickory, NC 28601 (US)
(74) Representative: Dohmen, Johannes Maria Gerardus

(56) References cited:
- DE-C- 4 139 825
- DE-U- 29 618 632
- DE-U- 29 703 083
- US-A- 4 457 544

## Description

### Background

There is a recent trend to install cables in sewers. The preferred non-intrusive method is achieved by installing corrugated conduit in the sewers and pulling the cable through the conduit. In order to allow access to the cable along the sewer line, such as in the manholes, the corrugated conduit generally extends from manhole to manhole. When the cable is pulled through the conduit, the cable exits one conduit on one side of the manhole and enters the next conduit at another side of the manhole such that a portion of the cable between the two conduits is accessible.

The problem with this arrangement is that there is no seal to prevent water, sewage or the like from entering the space between the cable and the conduit at the exposed end of the conduit. Thus, the cable may be subjected to harmful chemicals resident in sewer systems. Corrosion and hydrogen generation may occur which can be detrimental to the performance of the cable.

### Summary of the Invention

The present invention is designed to overcome this problem. According to one aspect of the invention, a seal is provided for sealing the space between the cable and the ends of the corrugated conduit. The seal includes a seal body including a base portion, an engagement portion attached to the base portion and being insertable in the space between the cable and the conduit, and a retainer disposed on the engagement portion for engaging at least one of the corrugations of the conduit. The base portion preferably has one or more grooves for retaining a corresponding number of 0-rings such that the 0-rings tightly circumscribe the cable to create a seal.

The retainer preferably includes helical threads disposed on the outside surface of the engagement portion. Alternatively, however, the retainer can include a rib which engages a corrugation or one or more protrusions which engages a corrugation. Further, the seal body is preferably split into two halves so that it can be installed onto the cable without requiring access to the end of the cable. Further, if the conduit does not have corrugations, the seal may be designed so that it does not have the retainer. In this case, the seal can be held in place by friction as a result of the tapered engagement portion that would be press-fit in the space between the conduit and the cable.

According to a further aspect of the invention, the body may include two body portions and a hinge interconnecting the two body portions. The seal defines an opening therein through which said cable passes and the base portion of the seal may include an internal rib that contacts the cable to act as a seal as a substitute, or in addition to, the O-ring. Thus, the seal can be one-piece.

It may be preferable to include an alignment device for aligning said body portions when said body portions are pivoted with respect to said hinge to enclose said cable. The alignment device may include a pin on one of said body portions and a hole in another of said body portions for receiving said pin.

The invention also includes a method of sealing the space between the cable and the conduit using the seal.

### Brief Description of the Drawings

Fig. 1 is a cross-sectional view of the seal according to a first embodiment of the present invention;
Fig. 2 is an end view of the seal according to the first embodiment of the invention;
Fig. 3 is an end view of the seal according to a second embodiment of the invention;
Fig. 4 is an end view of the seal according to a third embodiment of the invention;
Fig. 5 is an end view of the seal according to a fourth embodiment of the invention;
Fig. 6 is a cross-sectional view of the seal according to yet a further embodiment of the invention; and
Fig. 7 is a cross-sectional view of still a further embodiment of the invention.

### Detailed Description

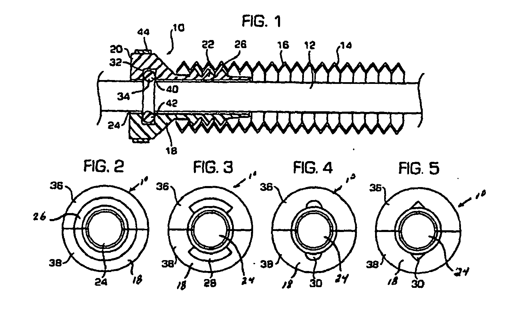

A preferred embodiment of the invention will now be described with reference to Figs. 1 and 2.

As noted above, the seal 10 is insertable into an annular space between a cable 12 and a conduit 14 having corrugations 16 so that water, sewage and the like cannot penetrate the space.

The seal 10 includes a seal body 18 having a base portion 20 and a tapered engagement portion 22 that extends from the base portion 20. The seal body 18 also has a longitudinal through hole 24 for receiving the cable 12, as discussed below. The engagement portion 22 has a retainer 26 for engaging a corrugation 16 of the conduit 14 in order to secure the seal body 18 to the conduit 14, as illustrated in Fig. 1.

According to the preferred embodiment, the retainer 26 is in the form of external threads so that the engaging portion can be screwed into the corrugated conduit 14. However, the invention is not limited in this respect. For example, the retainer could include one or more ribs 28 that extend from the engagement portion, as illustrated in Fig. 3, or a one or more projections 30, as shown in Figs. 4 and 5. Further, the projections can have a round end as shown in Fig. 4 or a pointed end (e.g., V-shaped), as shown in Fig. 5.

The base portion 20 has a groove 32 extending around the inner surface thereof for retaining an O-ring 34. This ensures a tight seal between the seal body 18 and the cable 12. Again, however, the invention is not limited to requiring an O-ring. For example, a seal ring could be secured to the rear end of the seal body 18 in such a manner that it presses against the cable. Also, there could be a plurality of grooves for receiving a corresponding number of O-rings.

Also, although it is preferred that the seal body 18 be made of plastic, it could alternatively be made of other materials, such as rubber, that may provide better sealing with the cable.

When the end of the cable is accessible, the seal body 18 can be one-piece since it can be slipped over the end of the cable. However, in most instances, the end of the cable will not be accessible in which case the seal body 18 should preferably be made out of two halves 36 and 38. Correspondingly, the 0-ring 34 should also be split into two halves 40 and 42. Naturally, the invention is not intended to be limited in this respect. For example, it is possible that the seal body 18 and the 0-ring, or rings, could be split into three or more pieces.

Although not necessary, a clamp 44 may be provided for holding the two halves 36 and 38 together. The clamp may be in the form of an elastic band that circumscribes the base portion 20 of the two halves, as illustrated in Fig. 1. Again, however, it should be emphasized that the clamp is not necessary since the two halves are automatically held together after they have been inserted into the conduit.

After the cable has been pulled through the conduit, the two seal halves 36 and 38, having respective 0-ring halves 40 and 42 retained in the O-ring groove 32, are slipped over the cable and held together. Thereafter, the seal body 18 is rotated so that the retainer, e.g., the threads 26, engages the corrugations 16 of the conduit 14. Thus, the seal body 18 can be easily engaged with the conduit and held in place with the 0-ring 34 tightly retained against the cable 12.

The seal of the present invention can be used with any type of cable that is disposed inside corrugated conduit, including, for example, copper cable and optical fiber cable.

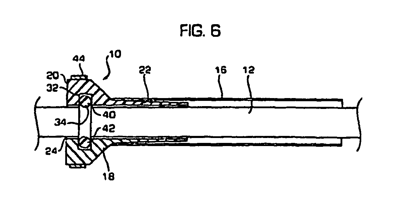

Fig. 6 shows yet another embodiment of the present invention in which the seal 10 can be used to seal an end of a conduit 16 that does not have corrugations. In this particular embodiment, the conduit 16 is a cylindrical sleeve. The seal 10 is similar to the seal of the first embodiment, the only difference being that a retainer is not required. Instead, the seal 10 is held in place by press-fitting the seal into the space between the conduit 16 and the cable 12. The tapered engagement portion 12 is held in place by friction. On the other hand, the seal could include a retainer 26 such as helical threads that will self-thread the inside surface of the conduit to assist in holding the seal in place.

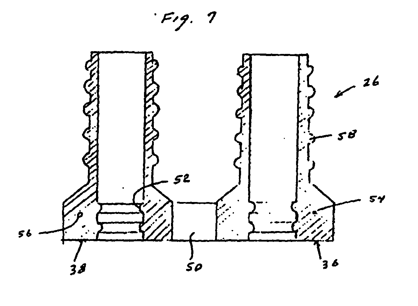

Fig. 7 illustrates yet a further embodiment of the invention. In this embodiment, the seal 10 is made of two halves or body portions 36 and 38, similar to the above embodiment. However, in this embodiment, the two body portions 36 and 38 are interconnected by a hinge portion 50 so as to form a one-piece seal. In addition, the seal is preferably made out of a soft plastic such as a polypropylene copolymer and includes one or more internal ribs 52 that perform the sealing function of the 0-ring 34, discussed above in regard to the other embodiments. The advantage of making the seal of a compliant material is that the separate O-rings can be eliminated in favor of the rib(s) which is part of the seal. Therefore, the entire seal can be formed of a single piece making the seal easier to use in the field where the space in the sewer is restricted and the light is minimal. Further, the compliant material allows the hinge to flex or bend repeatedly without breaking

In addition, polypropylene copolymers have a relatively low coefficient of thermal expansion relative to other polymer materials, such as PVC (polyvinylchloride) or LLDPE (linear, low density, polyethylene) compounds, or the like. For example, the coefficient of expansion of LLDPE and PVC is on the order of 8 X 10 ⁻⁵ (°C⁻¹) below 0°C, whereas coefficient of thermal expansion of polypropylene materials is on the order of 2 X 10 ⁻⁵ (°C⁻¹) at this temperature range. The fourfold reduction in the coefficient of thermal expansion for the polypropylene material is a substantial advantage. Further, since the coefficient of expansion for the stainless steel conduit is 2.5 X 10 ⁻⁵ (°C⁻¹), the seal and the conduit expand and contract at substantially the same rate when the temperature changes.

In addition, although not required, the seal may include an alignment pin 54 on one of the body portions and an associated receiving hole 56 on the other body portion to assisting in aligning the two body portions during installation.

In the embodiment illustrated in Fig. 7, the retainer 26 includes a plurality or external ribs 58 for engaging the corrugations of the conduit 14. However, this embodiment of the invention is not intended to be limited to this particular retainer design. As discussed above with respect to the previous embodiments, the retainer may include external threads, rounded or V-shaped projections or the like. Alternatively, as with the embodiment illustrated in Fig. 6, the seal can include a tapered engagement portion that is held in place by friction, thereby eliminating the need for a retainer. The seal can then be use even if the conduit for the cable does not have corrugations.

Finally, the seal may include three or more body portions interconnected by hinges, instead of just two seal halves or body portions.

Having described the invention with particular reference to the preferred embodiments, it will be obvious to those skilled in the art to which the invention pertains after understanding the invention, that various modifications and changes may be made therein without departing from the spirit and scope of the invention as defined by the claims appended hereto. For example, although it is preferred that the engage portion be tapered, as shown in Fig. 1, the taper is not required.

## Claims

1. A seal (10) comprising:
a seal body (18) including:
a base portion (20); and
an engagement portion (22) attached to said base portion (20), said engagement portion (22) being insertable into a space defined between a cable (12) and a conduit (14) surrounding the cable (12) and having corrugations (16); and
a retainer (26) disposed on said engagement portion (22) for engaging at least one of said corrugations (26), **characterized in that**
said base portion (20) includes a groove (32) extending circumferentially around an inner surface thereof, wherein
an o-ring (34) is retained in said groove (32).

2. The seal (10) of claim 1, wherein said retainer (26) comprises least one thread disposed on said engagement portion (22) for threadedly engaging said corrugations (16).

3. The seal (10) of claim 1, wherein said retainer (26) comprises at least one rib (58) extending from said engagement portion (22).

4. The seal (10) of claim 1, wherein said retainer (26) comprises at least one protrusion extending from said engagement portion (22).

5. The seal of claim 1, wherein an outside surface of said engagement portion (22) is tapered.

6. The seal (10) of claim 1, wherein said seal body (18) is made of two body halves.

7. The seal (10) of claim 6, further comprising a clamp for circumscribing said base portion (20) of each of said body halves to hold said body halves together.

8. The seal (10) of claim 6, wherein said retainer (26) comprises at least one thread disposed on said engagement portion (22) for threadedly engaging said corrugations (16).

9. The seal (10) of claim 6, wherein said retainer (26) comprises a rib (58) circumscribing said engagement portion (22).

10. The seal (10) of claim 6, wherein said retainer (26) comprises at least one protrusion extending from said engagement portion (22).

11. The seal (10) of claim 6, wherein an outside surface of said engagement portion (22) is tapered.

12. The seal (10) of claim 1, wherein said seal body (18) is plastic.

13. The seal (10) of claim 6, wherein said seal body (18) is plastic.

14. The seal (10) of claim 7, wherein said seal body (18) is plastic and said retainer is plastic.

15. The seal (10) of claim 7, wherein said seal body (18) is plastic and said retainer (26) is metal.

16. The seal (10) of claim 1, wherein said seal body (18) includes two body portions and a hinge interconnecting said two body portions.

17. The seal (10) of claim 16, wherein paid seal defines an opening therein through which said cable (12) passes and wherein said base portion (20) of said seal body (18) includes an internal rib that contacts said cable.

18. The seal (10) of claim 17, wherein said seal is one-piece and made of polyvinylchloride.

19. The seal (10) of claim 17, further comprising an alignment device for aligning said body portions when said body portions are pivoted with respect to said hinge to enclose said cable (12).

20. The seal (10) of claim 19, wherein said alignment device includes a pin on one of said body portions and a hole (56) in another of said body portions for receiving said pin (54).

21. A seal (10) comprising:
a seal body (18) having an engagement portion (22) that is insertable into a space defined between a cable (12) and a conduit (14) surrounding the cable and having corrugations (16), said engagement portion (22) being engageable with at least one of said corrugations, **characterised in that**
said seal body (18) has a groove (32) extending circumferentially around an inner surface thereof for receiving an O-ring (34).

22. The seal (10) of claim 21, wherein said seal body (18) includes a plurality of body portions and a hinge interconnecting said body portions.

23. The seal (10) of claim 22, wherein said seal body (18) defines an opening therein through which said cable passes and includes an internal rib (52) that contacts said cable (12).

24. The seal (10) of claim 22, wherein said seal body is one-piece.

25. The seal (10) of claim 24, further comprising an alignment device for aligning said body portions when said body portions are pivoted with respect to said hinge to enclose said cable.

26. The seal (10) of claim 25, wherein said alignment device includes a pin (54) on one of said body potions and a hole (56) in another of said body portions for receiving said pin (54).

27. A seal (10) comprising:
a seal body (18) including:
a base portion (20), and
an engagement portion (22) attached to said base portion (20), said engagement portion (22) being tapered and being insertable into a space defined between a cable (12) and a conduit (14) surrounding the cable, **characterized in that** said base portion (20) includes a groove (32) extending circumferentially around an inner surface thereof, wherein an O-ring (34) retained in said groove (32).

28. The seal (10) of claim 27, wherein said seal body (18) includes two body portions and a hinge interconnecting said two body portions.

29. A method of installing a cable (12) in a conduit (14), comprising:
inserting the cable (12) through tho conduit such that the cable (12) extends from at least one end of the conduit; and
positioning a seal (10) in a space defined between the cable (12) and the conduit (14) at said one end to prevent contamination from entering into said space
wherein said seal (10) includes a retaining member (26) and said conduit (14) has corrugations (16), and wherein said positioning step includes securing said seal (10) in said space by causing said retaining member (26) to engage at least one of said corrugations (16), **characterized in that** said method further comprises the step of providing an O-ring (34) inside said seal before said positioning step, said O-ring (34) fitting snugly around said cable (12).

30. The method of claim 29, wherein said seal (10) includes two halves that are separable from each other and wherein said method further comprises the step of positioning said seal halves around said cable (12) prior to said positioning step.

31. The method of claim 29, wherein said seal (10) includes a through-hole therein and wherein said positioning step includes the step of inserting said cable (12) through said through-hole.

32. The method of claim 29, wherein said seal (10) includes two body portions interconnected by a hinge and said method further comprises the step of placing said seal (10) around said conduit (14) by pivoting said body portions with respect to said hinge.

33. A conduit assembly comprising:
a conduit including a cable (12) therein; and
a seal body (18) having an engagement portion (22) that is insertable into a space defined between the cable (12) and the conduit (14) surrounding the cable (12) and having corrugations (16), said engagement portion (22) being engageable with at least one of said corcugations (16), **characterized in that** said seal body has a groove (32) extending circumforentially around an inner surface thereof for receiving on O-ring (34).

34. The conduit assembly of claim 33, wherein said seal body (18) includes a plurality of body portions and a hinge interconnecting said body portions.

35. The conduit assembly of claim 34, wherein said seal body (18) defines an opening therein through which said cable (12) passes and includes an internal rib (52) that contacts said cable (12),

36. The conduit assembly of claim 34, wherein said seal body (18) is one-piece.

## Patentansprüche

1. Eine Dichtung (10), aufweisend:
- einen Dichtungskörper (18) mit
einem Basisteil (20) und
einem Eingriffsteil (22), der am Basisteil (20) befestigt ist, wobei der Eingriffsteil (22) in einen Raum einsteckbar ist, der zwischen einem Kabel (12) und einem das Kabel (12) umgebenden und Wellen (16) aufweisenden Leitungsrohr (14) definiert wird; und
- eine auf dem Eingriffsteil (22) angeordnete Halterung (26) zum Ergreifen mindestens einer der Wellen (16), **dadurch gekennzeichnet, dass** der Basisteil (20) eine Nut (32) besitzt, die am Umfang um eine Innenfläche davon verläuft, bei der ein O-Ring (34) in der Nut (32) gehalten wird.

2. Dichtung (10) gemäß Anspruch 1, bei der die Halterung (26) mindestens ein Gewinde aufweist, das auf dem Eingriffsteil (22) angeordnet ist, um die Wellen (16) gewindeartig zu ergreifen.

3. Dichtung (10) gemäß Anspruch 1, bei der die Halterung (26) mindestens eine vom Eingriffsteil (22) aus verlaufende Rippe (58) aufweist.

4. Dichtung (10) gemäß Anspruch 1, bei der die Halterung (26) mindestens einen vom Eingriffsteil (22) aus verlaufenden Vorsprung aufweist.

5. Dichtung gemäß Anspruch 1, bei der eine Außenfläche des Eingriffsteils (22) konisch zuläuft.

6. Dichtung (10) gemäß Anspruch 1, bei welcher der Dichtungskörper (18) aus zwei Körperhälften hergestellt ist.

7. Dichtung (10) gemäß Anspruch 6, ferner aufweisend eine Klemme zum Umschreiben des Basisteils (20) jeder der Körperhälften, um die Körperhälften zusammenzuhalten.

8. Dichtung (10) gemäß Anspruch 6, bei der die Halterung (26) mindestens ein auf dem Eingriffsteil (22) angeordnetes Gewinde aufweist, um die Wellen (16) gewindeartig zu ergreifen.

9. Dichtung (10) gemäß Anspruch 6, bei der die Halterung (26) eine den Eingriffsteil (22) umschreibende Rippe (58) aufweist.

10. Dichtung (10) gemäß Anspruch 6, bei der die Halterung (26) mindestens einen vom Eingriffsteil (22) aus verlaufenden Vorsprung aufweist.

11. Dichtung (10) gemäß Anspruch 6, bei der eine Außenfläche des Eingriffsteils (22) konisch zuläuft.

12. Dichtung (10) gemäß Anspruch 1, bei welcher der Dichtungskörper (18) aus Kunststoff besteht.

13. Dichtung (10) gemäß Anspruch 6, bei welcher der Dichtungskörper (18) aus Kunststoff besteht.

14. Dichtung (10) gemäß Anspruch 7, bei welcher der Dichtungskörper (18) aus Kunststoff besteht und die Halterung aus Kunststoff besteht.

15. Dichtung (10) gemäß Anspruch 7, bei welcher der Dichtungskörper (18) aus Kunststoff besteht und die Halterung (26) aus Metall besteht.

16. Dichtung (10) gemäß Anspruch 1, bei welcher der Dichtungskörper (18) zwei Körperteile und eine die zwei Körperteile miteinander verbindende Schwenkverbindung besitzt.

17. Dichtung (10) gemäß Anspruch 16, bei der die Dichtung darin eine Öffnung definiert, durch die das Kabel (12) verläuft und in welcher der Basisteil (20) des Dichtungskörpers (18) eine innere Rippe besitzt, die das Kabel berührt.

18. Dichtung (10) gemäß Anspruch 17, bei der die Dichtung aus einem Stück besteht und aus Polyvinylchlorid hergestellt ist.

19. Dichtung (10) gemäß Anspruch 17, ferner aufweisend eine Ausrichtvorrichtung zum Ausrichten der Körperteile, wenn die Körperteile in Bezug auf die Schwenkverbindung gedreht werden, um das Kabel (12) einzuschließen.

20. Dichtung (10) gemäß Anspruch 19, bei der die Ausrichtvorrichtung auf einem der Körperteile einen Stift und in einem anderen der Körperteile ein Loch (56) zum Aufnehmen des Stifts (54) besitzt.

21. Eine Dichtung (10), aufweisend:
- einen Dichtungskörper (18) mit einem Eingriffsteil (22), der in einen Raum, der zwischen einem Kabel (12) und einem das Kabel umgebenden und Wellen (16) aufweisenden Leitungsrohr (14) definiert wird, einsteckbar ist, wobei der Eingriffsteil (22) mit mindestens einer der Wellen in Eingriff gebracht werden kann, **dadurch gekennzeichnet, dass** der Dichtungskörper (18) eine Nut (32) besitzt, die am Umfang um eine Innenfläche davon verläuft, um einen O-Ring (34) aufzunehmen.

22. Dichtung (10) gemäß Anspruch 21, bei welcher der Dichtungskörper (18) eine Vielzahl von Körperteilen und eine die Körperteile miteinander verbindende Schwenkverbindung besitzt.

23. Dichtung (10) gemäß Anspruch 22, bei welcher der Dichtungskörper (18) darin eine Öffnung definiert, durch die das Kabel verläuft, und eine innere Rippe (52) besitzt, die das Kabel (12) berührt.

24. Dichtung (10) gemäß Anspruch 22, bei welcher der Dichtungskörper aus einem Stück besteht.

25. Dichtung (10) gemäß Anspruch 24, ferner aufweisend eine Ausrichtvorrichtung zum Ausrichten der Körperteile, wenn die Körperteile in Bezug auf die Schwenkverbindung gedreht werden, um das Kabel einzuschließen.

26. Dichtung (10) gemäß Anspruch 25, bei der die Ausrichtvorrichtung auf einem der Körperteile einen Stift (54) und in einem anderen der Körperteile ein Loch (56) zum Aufnehmen des Stifts (54) besitzt.

27. Eine Dichtung (10), aufweisend:
- einen Dichtungskörper (18) mit
einem Basisteil (20) und
einem Eingriffsteil (22), der am Basisteil (20) befestigt ist, wobei der Eingriffsteil (22) konisch zuläuft und in einen Raum einsteckbar ist, der zwischen einem Kabel (12) und einem das Kabel umgebenden Leitungsrohr (14) definiert wird, **dadurch gekennzeichnet, dass** der Basisteil (20) eine Nut (32) besitzt, die am Umfang um eine Innenfläche davon verläuft, bei der ein O-Ring (34) in der Nut (32) gehalten wird.

28. Dichtung (10) gemäß Anspruch 27, bei welcher der Dichtungskörper (18) zwei Körperteile und eine die zwei Körperteile miteinander verbindende Schwenkverbindung besitzt.

29. Ein Verfahren zum Verlegen eines Kabels (12) in einem Leitungsrohr (14), aufweisend:
- Einlegen des Kabels (12) durch das Leitungsrohr in der Weise, dass das Kabel (12) von mindestens einem Ende des Leitungsrohrs aus verläuft; und
- Positionieren einer Dichtung (10) in einem Raum, der zwischen dem Kabel (12) und dem Leitungsrohr (14) an dem einen Ende definiert wird, um das Eindringen von Verunreinigungen in den Raum zu verhindern,
bei dem die Dichtung (10) ein Halteelement (26) besitzt und das Leitungsrohr (14) Wellen (16) besitzt und bei dem der Schritt des Positionierens das Befestigen der Dichtung (10) in dem Raum **dadurch**, dass das Halteelement (26) in Eingriff mit mindestens einer der Wellen (16) gebracht wird, einschließt, **dadurch gekennzeichnet, dass** das Verfahren ferner den Schritt des Einbringens eines O-Rings (34) innerhalb der Dichtung vor dem Schritt des Positionierens aufweist, wobei der O-Ring (34) satt um das Kabel (12) anliegt.

30. Verfahren gemäß Anspruch 29, bei dem die Dichtung (10) zwei Hälften besitzt, die voneinander trennbar sind, und das ferner den Schritt des Positionierens der Dichtungshälften um das Kabel (12) vor dem Schritt des Positionierens aufweist.

31. Verfahren gemäß Anspruch 29, bei dem die Dichtung (10) ein Durchgangsloch besitzt und bei dem der Schritt des Positionierens den Schritt des Einsteckens des Kabels (12) durch das Durchgangsloch einschließt.

32. Verfahren gemäß Anspruch 29, bei dem die Dichtung (10) zwei Körperteile besitzt, die durch eine Schwenkverbindung miteinander verbunden sind, und bei dem das Verfahren ferner der Schritt des Legens der Dichtung (10) um das Leitungsrohr (14) durch Drehen der Körperteile in Bezug auf die Schwenkverbindung aufweist.

33. Eine Leitungsrohrbaueinheit, aufweisend:
- ein Leitungsrohr mit einem Kabel (12) darin; und
- einen Dichtungskörper (18) mit einem Eingriffsteil (22), der in einen Raum einsteckbar ist, der zwischen dem Kabel (12) und dem Leitungsrohr (14), welches das Kabel (12) umgibt und Wellen (16) besitzt, definiert wird, wobei der Eingriffsteil (22) mit mindestens einer der Wellen (16) in Eingriff gebracht werden kann, **dadurch gekennzeichnet, dass** der Dichtungskörper eine Nut (32) besitzt, die am Umfang um eine Innenfläche davon verläuft, um einen O-Ring (34) aufzunehmen.

34. Leitungsrohrbaueinheit gemäß Anspruch 33, bei welcher der Dichtungskörper (18) eine Vielzahl von Körperteilen und eine die Körperteile miteinander verbindende Schwenkverbindung besitzt.

35. Leitungsrohrbaueinheit gemäß Anspruch 34, bei welcher der Dichtungskörper (18) darin eine Öffnung definiert, durch die das Kabel (12) verläuft, und eine innere Rippe (52) besitzt, die das Kabel (12) berührt.

36. Leitungsrohrbaueinheit gemäß Anspruch 34, bei welcher der Dichtungskörper (18) aus einem Stück besteht.

## Revendications

1. Joint d'étanchéité (10), comprenant :
un corps de joint d'étanchéité (18) comprenant :
une partie de base (20) ; et
une partie de mise en prise (22) fixée à ladite partie de base (20), ladite partie de mise en prise (22) pouvant être insérée dans un espace défini entre un câble (12) et un conduit (14) entourant le câble (12) et ayant des ondulations (16), et
un dispositif de retenue (26) disposé sur ladite partie de mise en prise (22) pour mettre en prise au moins l'une desdites ondulations (16), **caractérisé en ce que** :
ladite partie de base (20) comprend une rainure (32) s'étendant de manière circonférentielle autour de sa surface interne, dans lequel :
un joint torique (34) est retenu dans ladite rainure (32).

2. Joint d'étanchéité (10) selon la revendication 1, dans lequel ledit dispositif de retenue (26) comprend au moins un filetage disposé sur ladite partie de mise en prise (22) pour mettre en prise par filetage lesdites ondulations (16).

3. Joint d'étanchéité (10) selon la revendication 1, dans lequel ledit dispositif de retenue (26) comprend au moins une nervure (58) s'étendant à partir de la partie de mise en prise (22).

4. Joint d'étanchéité (10) selon la revendication 1, dans lequel ledit dispositif de retenue (26) comprend au moins une saillie s'étendant à partir de ladite partie de mise en prise (22).

5. Joint d'étanchéité selon la revendication 1, dans lequel une surface externe de ladite partie de mise en prise (22) est progressivement rétrécie.

6. Joint d'étanchéité (10) selon la revendication 1, dans lequel ledit corps de joint d'étanchéité (18) est réalisé avec deux moitiés de corps.

7. Joint d'étanchéité (10) selon la revendication 6, comprenant en outre une pince pour limiter ladite partie de base (20) de chacune desdites moitiés de corps pour maintenir lesdites moitiés de corps ensemble.

8. Joint d'étanchéité (10) selon la revendication 6, dans lequel ledit dispositif de retenue (26) comprend au moins un filetage disposé sur ladite partie de mise en prise (22) pour mettre en prise par filetage lesdites ondulations (16).

9. Joint d'étanchéité (10) selon la revendication 6, dans lequel ledit dispositif de retenue (26) comprend une nervure (58) limitant ladite partie de mise en prise (22).

10. Joint d'étanchéité (10) selon la revendication 6, dans lequel ledit dispositif de retenue (26) comprend au moins une saillie s'étendant à partir de ladite partie de mise en prise (22).

11. Joint d'étanchéité (10) selon la revendication 6, dans lequel une surface externe de ladite partie de mise en prise (22) est progressivement rétrécie.

12. Joint d'étanchéité (10) selon la revendication 1, dans lequel ledit corps de joint d'étanchéité (18) est en plastique.

13. Joint d'étanchéité (10) selon la revendication 6, dans lequel ledit corps de joint d'étanchéité (18) est en plastique.

14. Joint d'étanchéité (10) selon la revendication 7, dans lequel ledit corps de joint d'étanchéité (18) est en plastique et ledit dispositif de retenue est en plastique.

15. Joint d'étanchéité (10) selon la revendication 7, dans lequel ledit corps de joint d'étanchéité (18) est en plastique et ledit dispositif de retenue (26) est en métal.

16. Joint d'étanchéité (10) selon la revendication 1, dans lequel ledit corps de joint d'étanchéité (18) comprend deux parties de corps et une charnière interconnectant lesdites deux parties de corps.

17. Joint d'étanchéité (10) selon la revendication 16, dans lequel ledit joint d'étanchéité définit une ouverture à l'intérieur de celui-ci, à travers laquelle ledit câble (12) passe et dans lequel ladite partie de base (20) dudit corps de joint d'étanchéité (18) comprend une nervure interne qui est en contact avec ledit câble.

18. Joint d'étanchéité (10) selon la revendication 17, dans lequel ledit joint d'étanchéité est d'un seul tenant et réalisé avec du polychlorure de vinyle.

19. Joint d'étanchéité (10) selon la revendication 17, comprenant en outre un dispositif d'alignement pour aligner lesdites parties de corps lorsque lesdites parties de corps sont pivotées par rapport à ladite charnière pour enfermer ledit câble (12).

20. Joint d'étanchéité (10) selon la revendication 19, dans lequel ledit dispositif d'alignement comprend une broche sur l'une desdites parties de corps et un trou (56) dans une autre desdites parties de corps pour recevoir ladite broche (54).

21. Joint d'étanchéité (10) comprenant :
un corps de joint d'étanchéité (18) ayant une partie de mise en prise (22) qui peut être insérée dans un espace défini entre un câble (12) et un conduit (14) entourant le câble et ayant des ondulations (16), ladite partie de mise en prise (22) pouvant être mise en prise avec au moins lesdites ondulations, **caractérisé en ce que** :
ledit corps de joint d'étanchéité (18) a une rainure (32) s'étendant de manière circonférentielle autour de sa surface interne pour recevoir un joint torique (34).

22. Joint d'étanchéité (10) selon la revendication 21, dans lequel ledit corps de joint d'étanchéité (18) comprend une pluralité de parties de corps et une charnière interconnectant lesdites parties de corps.

23. Joint d'étanchéité (10) selon la revendication 22, dans lequel ledit corps de joint d'étanchéité (18) définit une ouverture à l'intérieur de celui-ci à travers laquelle ledit câble passe et comprend une nervure interne (52) qui est en contact avec ledit câble (12).

24. Joint d'étanchéité (10) selon la revendication 22, dans lequel ledit corps de joint d'étanchéité est d'un seul tenant.

25. Joint d'étanchéité (10) selon la revendication 24, comprenant en outre un dispositif d'alignement pour aligner lesdites parties de corps lorsque lesdites parties de corps sont pivotées par rapport à ladite charnière pour enfermer ledit câble.

26. Joint d'étanchéité (10) selon la revendication 25, dans lequel ledit dispositif d'alignement comprend une broche (54) sur l'une desdites parties de corps et un trou (56) dans une autre desdites parties de corps pour recevoir ladite broche (54).

27. Joint d'étanchéité (10) comprenant :
un corps de joint d'étanchéité (18), comprenant :
une partie de base (20) ; et
une partie de mise en prise (22) fixée sur ladite partie de base (20), ladite partie de mise en prise (22) étant progressivement rétrécie et pouvant être insérée dans un espace défini entre un câble (12) et un conduit (14) entourant le câble, **caractérisé en ce que** ladite partie de base (20) comprend une rainure (32) s'étendant de manière circonférentielle autour de sa surface interne, dans lequel un joint torique (34) est retenu dans ladite rainure (32).

28. Joint d'étanchéité (10) selon la revendication 27, dans lequel ledit corps de joint d'étanchéité (18) comprend deux parties de corps et une charnière interconnectant lesdites deux parties de corps.

29. Procédé pour installer un câble (12) dans un conduit (14), comprenant les étapes consistant à :
insérer le câble (12) dans le conduit, de sorte que le câble (12) s'étend à partir d'au moins une extrémité du conduit, et
positionner un joint d'étanchéité (10) dans un espace défini entre le câble (12) et le conduit (14) au niveau de ladite extrémité pour empêcher la contamination d'entrer dans ledit espace,
dans lequel ledit joint d'étanchéité (10) comprend un élément de retenue (26) et ledit conduit (14) a des ondulations (16) et dans lequel ladite étape de positionnement comprend l'étape consistant à fixer ledit joint d'étanchéité (10) dans ledit espace en amenant ledit élément de retenue (26) à mettre en prise l'une desdites ondulations (16), **caractérisé en ce que** ledit procédé comprend en outre :
l'étape consistant à prévoir un joint torique (34) à l'intérieur dudit joint d'étanchéité avant ladite étape de positionnement, ledit joint torique (34) s'adaptant parfaitement autour dudit câble (12).

30. Procédé selon la revendication 29, dans lequel ledit joint d'étanchéité (10) comprend deux moitiés qui sont séparables l'une de l'autre et dans lequel ledit procédé comprend l'étape consistant à positionner lesdites moitiés de joint d'étanchéité autour dudit câble (12) avant ladite étape de positionnement.

31. Procédé selon la revendication 29, dans lequel ledit joint d'étanchéité (10) comprend un trou de passage à travers celui-ci et dans lequel ladite étape de positionnement comprend l'étape consistant à insérer ledit câble (12) à travers ledit trou de passage.

32. Procédé selon la revendication 29, dans lequel ledit joint d'étanchéité (10) comprend deux parties de corps interconnectées par une charnière et ledit procédé comprend en outre l'étape consistant à placer ledit joint d'étanchéité (10) autour dudit conduit (14) en faisant pivoter lesdites parties de corps par rapport à ladite charnière.

33. Ensemble de conduit, comprenant :
un conduit comprenant un câble (12) à l'intérieur de celui-ci ; et
un corps de joint d'étanchéité (18) ayant une partie de mise en prise (22) qui peut être insérée dans un espace défini entre le câble (12) et le conduit (14) entourant le câble (12) et ayant des ondulations (16), ladite partie de mise en prise (22) pouvant être mise en prise avec au moins l'une desdites ondulations (16), **caractérisé en ce que** ledit corps de joint d'étanchéité a une rainure (32) s'étendant de manière circonférentielle autour de sa surface interne pour recevoir un joint torique (34).

34. Ensemble de conduit selon la revendication 33, dans lequel ledit corps de joint d'étanchéité (18) comprend une pluralité de parties de corps et une charnière interconnectant lesdites parties de corps.

35. Ensemble de conduit selon la revendication 34, dans lequel ledit corps de joint d'étanchéité (18) définit une ouverture à travers celui-ci, à travers laquelle ledit câble (12) passe et comprend une nervure interne (52) qui est en contact avec ledit câble (12).

36. Ensemble de conduit selon la revendication 34, dans lequel ledit corps de joint d'étanchéité (18) est d'un seul tenant.
